# EUROPÄISCHE PATENTSCHRIFT

(11) **EP 0 515 784 B1**
(45) Veröffentlichungstag und Bekanntmachung des Hinweises auf die Patenterteilung: **24.04.1996**
(21) Anmeldenummer: 92104554.8
(22) Anmeldetag: 17.03.1992
(51) Int. Cl.: G02B 6/30, G02B 6/42, G02B 6/26

(54) **Vorrichtung zum Positionieren von Lichtleitfasern**
Apparatus for positioning of optical fibres
Dispositif pour positionner des fibres optiques

(30) Priorität: 28.05.1991 DE 4117449
(43) Veröffentlichungstag der Anmeldung: 02.12.1992
(73) Patentinhaber: Forschungszentrum Karlsruhe GmbH, D-76133 Karlsruhe (DE)
(72) Erfinder: Bley, Peter, Dr., W-7514 Egg.-Leopoldshafen (DE)
(74) Vertreter: Gottlob, Peter, Dipl. Ing.

(56) Entgegenhaltungen:
- EP-A- 0 171 615
- EP-A- 0 324 492
- WO-A-91/02271
- PATENT ABSTRACTS OF JAPAN vol. 12, no. 380 (P-769)12. Oktober 1988 & JP-A-63 127 207

## Beschreibung

Die vorliegende Erfindung betrifft eine Vorrichtung zum Positionieren von Lichtleitfasern, mit den Merkmalen im Oberbegriff des Patentanspruches 1.

Eine solche Vorrichtung ist aus der EP-A-0 324 492 bekannt, mit der eine optische Faser zur Endfläche eines Wellenleiters justiert wird, wofür auf einem Substrat eine Struktur mit einem Führungskanal vorgesehen ist.

In der integrierten Optik bestehen Probleme bei der Koppelung von Lichtleiterfasern an integriert optischen Bauelemente (IO-Chips). Die an die Faserchipkopplung gestellten Anforderungen bzgl. der einzuhaltenden Toleranzen sind sehr hoch, da die lichtführenden Bereiche bei den Monomode-Lichtwellenleitern bzw. bei den Streifenwellenleitern auf dem IO-Chip räumlich sehr begrenzt sind (etwa 5 µm). Daraus ergibt sich z.B., daß die Versetzung zwischen der Mitte einer Faser und der Mitte des Streifenwellenleiters auf auf dem IO-Chip unter 0,5 µm liegen sollte.

Bisher erfolgte die Justierung der Faser durch Einlegen in mit anisotropem Ätzen in Silicium hergestellte V-Gruben, die Fixierung der Fasern wird Klebstoff durchgeführt. Die Verwendung von Klebstoffen sollte jedoch vermieden werden, da einerseits der unterschiedliche Wärmeausdehnungskoeffizient problematisch ist, andererseits kann das Ausdampfen von Lösungsmitteln zu einer Schädigung von optoelektronischen Komponenten führen. Auch sind die V-Gruben und damit auch die Lage aller Lichtleiterfasern gegeneinander fest vorgegeben und eine individuelle Justierung der Fasern, die aufgrund der unterschiedlichen Exzentrizitäten der lichtleitenden Faserkerne (± 2 µm) unter unterschiedlichen Durchmessern der Fasermäntel (± 2 µm) notwendig wäre, ist nicht möglich.

Ausgehend von diesem Stande der Technik hat nun die vorliegende Erfindung zur Aufgabe, eine Vorrichtung der eingangs beschrieben Art zu schaffen, die es ermöglicht, die einzelnen Lichtleitfasern individuell zu justieren und so die vorhandenen Maßungenauigkeiten der Fasern zu kompensieren.

Zur Lösung dieser Aufgabe schlägt nun die vorliegende Erfindung die Merkmale vor, die im Kennzeichen des Patentanspruches 1 aufgeführt sind. Eine weitere besonders vorteilhafte Ausgestaltung der vorliegenden Erfindung besteht aus den Merkmalen des Anspruchs 2 sowie den Merkmalen des Anspruches 3. Weitere vorteilhafte Merkmale ergeben sich aus den Kennzeichen der übrigen Unteransprüche.

Die Vorrichtung gem. der vorgeschlagenen Erfindung ermöglicht es nun in besonders günstiger Weise, die Fasern an z.B. IO-Chips anzukoppeln, wobei es möglich ist, die einzelnen Fasern individuell so zu justieren, daß für jede einzelne Faser eine optimale Lichtübertragung möglich wird. Gleichzeitig werden die an das Fertigungsverfahren gestellten Anforderungen so weit reduziert, daß nur noch globale Lageungenauigkeiten der Justiervorrichtungen von einigen Mikrometern notwendig sind.

Weitere Einzelheiten der vorliegenden Erfindung werden im folgenden anhand der Figuren 1 bis 3 näher erläutert.

Es zeigen:
Die Figur 1 schematisch die Ausführung einer Lichtleitfaserkoppelung nach der erfindungsgemäßen Vorrichtung in einer Schrägansicht, geöffnet,
die Figur 2 eine schematische Draufsicht
   und
die Figur 3 einen Querschnitt durch die Figur 2.

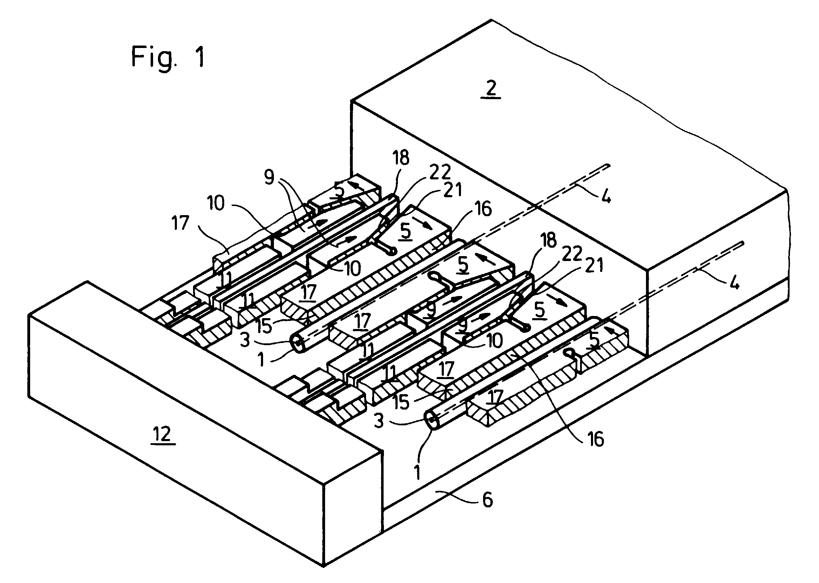

Die Figur 1 zeigt schematisch die Vorrichtung bzw. steckerartige Kopplung für den Anschluß von mehreren Lichtleitfasern 1 an die Leichtstreifenleiter 4 eines nicht näher dargestellten integriert optischen Bauelementes z.B. eines IO-Chips. Die Vorrichtung besteht aus einer Träger- bzw. Substratplatte 6, auf welcher die Strukturen zum Fixieren der Fasern 1 sitzen. Die Fasern 1 verlaufen dabei in Führungskanälen 15, die Hohlelemente der Strukturen bilden. Die Führungskanäle 15 werden zwischen den Vorderflächen 16 von je zwei vorderen Teilen 5 und hinteren Teilen 17 von Führungsklötzchen 5+17 gebildet. Die vorderen Teile 5 der Führungsklötzchen bilden zusammen mit den Klemmklötzchen 9 eine Struktur aus dem selben Material, zu dem auch die Zwischenstücke 18 gehören, die in später beschriebener Weise auf die Trägerplatte 6 aufgebracht wird und mit ihr, bis auf ihre beweglichen, gegenüber der Trägerplatte 6 durch einen Spalt im µm-Bereich getrennte Teile, fest verbunden ist.

Diese beweglichen Teile bestehen aus den vorderen Teilen 5 der Führungsklötzchen und den Klemmklötzchen 9, die gegenüber der Trägerplatte 6 bzw. den Zwischenstücken 18 -von oben betrachtet- seitlich beweglich sind, sowie die axial verschiebbaren Stempeln 11. Um die Beweglichkeit zu ermöglichen, ist zwischen den vorderen Teilen 5 der Führungsklötzchen bzw. den Klemmklötzchen 9 und der Oberfläche 19 der Grundplatte 6 der erwähnte Spalt 10 im µm-Bereich vorhanden.

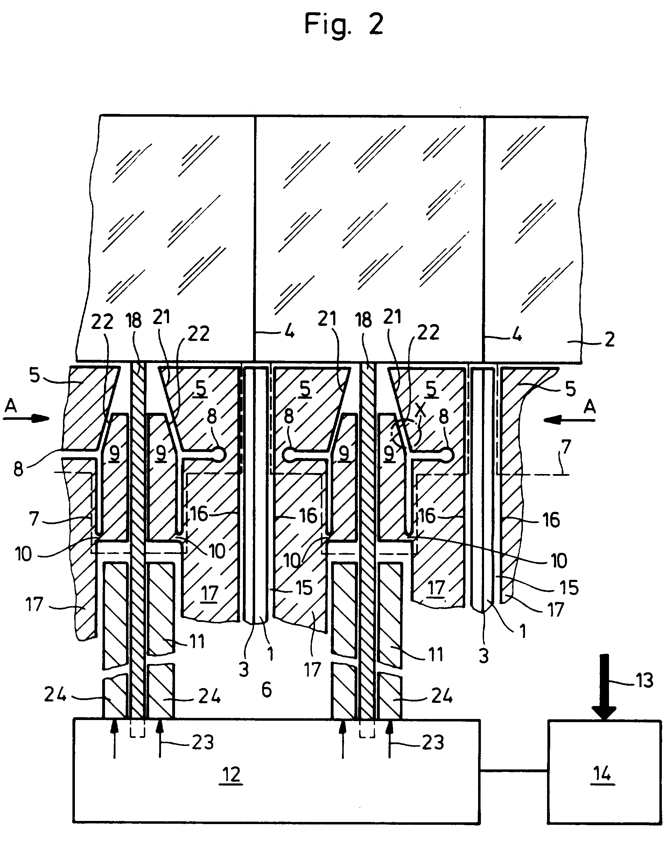

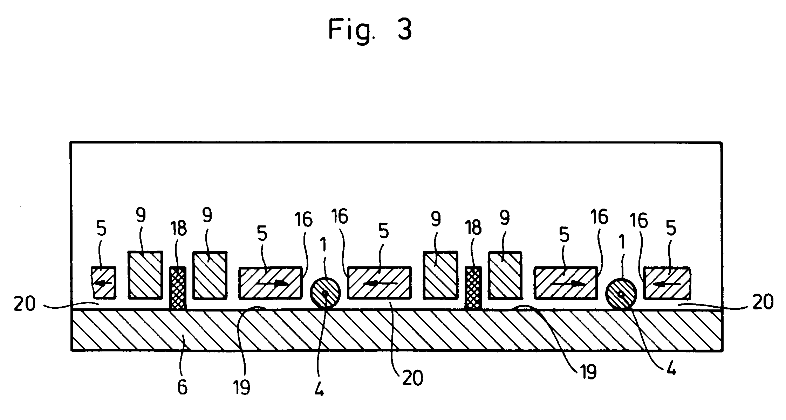

Der Spalt 20 (siehe die Figur 3) reicht vom Ende der vorderen Teile 5 der Führungsklötzchen bzw. der Spitze der Klemmklötzchen 9 bis zu der gestrichelten Begrenzungslinie 7 (siehe Figur 2), die den Übergang zum fest mit der Grundplatte 6 verbundenen Teil der Andruckelemente bzw. dem hinteren Teil 17 der Führungsklötzchen 5+17begrenzt. Somit bilden die vorderen Teile 5 der Führungsklötzchen federnde Elemente wie eine seitlich eingespannte Biegefeder, sie sind jedoch integrierter Bestandteil der auf der Trägerplatte 6 sitzenden Strukturmaterialanteile.

Die vorderen Teile 5 der Führungsklötzchen weisen an ihrem dem Chip 2 zugewendeten Ende auf der der Faser abgewendeten Seite eine von der Faser weggeneigte Anschrägung 21 auf. Neben jedem vorderen Teil 5 der Führungsklötzchen auf der der Faser 1 abgewendeten Seite im Bereich dieser Anschrägung 21 ist ein neben dem vorderen Teil 5 der Führungsklötzchen parallel zu ihm verschiebbarer Abstandshalter 9 angeordnet, der zunächst mit dem vorderen Teil 5 der Führungsklötzchen bzw. deren hinterem Teil 17 über die Sollbruchstelle bzw. Stege 10 verbunden ist. Jedes dieser Klemmklötzchen 9 besitzt an seinem oberen Ende ein mit den Anschrägungen 21 der vorderen Teile 5 der Führungsklötzchen korrespondierende schräge Fläche 22 gleicher Steigung. Hinter jedem Klemmklötzchen 9 befindet sich ein beweglicher Stempel 11, mittels welchem die Klemmklötzchen 9 jeweils für sich in Richtung der schrägen Anlaufflächen 21 und 22 bzw. in Richtung Chip 2 bewegbar sind. Die Stempel 11 können von einer Antriebseinheit 12 über Zwischenstücke 22 in Richtung 23 geschoben werden, wobei die Stücke 22 ebenfalls beweglich sind.

Die vorderen Teile 5 der Führungsklötzchen und die Klemmklötzchen 9 sind gemeinsamer Bestandteil der Teile der Struktur, zwischen welcher und der Grundplatte 11 der Spalte 20 vorhanden ist. Sie sind jedoch, wie bereits erwähnt, durch die mittels der Stempel 11 auslösbare Sollbruchstelle 10 voneinander trennbar.

Zwischen der Rückfläche der den Anschrägungen 21 und 22 angewendeten Seite der Klemmklötzchen 9 sind auf der Grundplatte 1 festsitzende Zwischenstücke 18 in Form langgestreckter Leisten vorhanden, auf deren geraden Seitenflächen sich die Rückseiten der Klemmklötzchen 9 beim Verschieben jeweils für sich abstützen.

Die Lichtleitfasern 1 sind nun an den IO-Chip 2 so zu koppeln, daß die lichtführenden Faserkerne 3 genau den Lichtstreifenleitern 4 des IO-Chips gegenüberliegen. Hierzu werden die Fasern 1, die einen Durchmesser von beispielsweise 125 µm haben, zwischen die etwa 100 µm hohen Führungsklötzchen 5+17 eingelegt. Diese Führungsklötzchen 5+17 sind fest auf der Grundplatte 6 aufgebracht, sie besitzen lediglich am vorderen Ende zwischen der getrichelten Linie 7 und dem IO-Chip von der Grundplatte 6 einen Abstand von ca. 3 µm (Herstellung dieses Abstandes nach dem bekannten Prinzip der Opferschichten). Damit die vorderen Teile 5 der Führungsklötzchen an ihren Ende parallel zur Ebene der Grundplatte nach Art eine eingespannten Blattfeder beweglich sind, sind in sie Einschnürungen 8 eingebracht.

Hinter jedem vorderen Teil 5 der Führungsklötzchen befindet sich je ein Klemmklötzchen 9. Die Enden der vorderen Teile 5 der Führungsklötzchen und der Klemmklötzchen 9 sind, wie bereits beschrieben, konisch so ausgebildet, daß bei einer Verschiebung der Klemmklötzchen 9 in Richtung IO-Chip 2 die Enden der vorderen Teile 5 der Führungsklötzchen gegen die Faser 1 gedrückt werden. Die Klemmklötzchen 9 werden zusammen mit der Gesamtanordnung so hergestellt, daß sie wie die Enden der vorderen Teile 5 der Führungsklötzchen frei beweglich sind, d.h. sie sind nicht fest mit der Grundplatte 6 verbunden. Damit sie bei den verschiedenen Arbeitsschritten auch auf der vorgesehenen Stelle bleiben, sind sie mit den sehr dünnen Stegen 10 mit den vorderen Teilen 5 der Führungsklötzchen wie eine Sollbruchstelle verbunden. Diese Stege 10 sind so dünn, daß sie bei einem Druck auf die Klemmklötzchen 9 in Richtung IO-Chip 2 leicht abbrechen.

Die Klemmklötzchen 9 können durch Stempel 11 in Richtung IO-Chip 2 verschoben werden. Die Stempel 11 sind mit einer Antriebseinheit 12 die mit Hilfe von Stellmotoren, Linearantrieben oder piezoelektrisch angetriebenen Verstellgliedern die Stempel in Richtung 23 verschieben kann.

Durch eine kontrollierte Verschiebung der beiden rechts und links neben einer Faser 1 liegenden Klemmklötzchen 9 ist es möglich, daß Ende der Faser 1 parallel zur Grundplatte 6 seitlich zu verschieben. Die Verschiebung der Klemmklötzchen 9 erfolgt nun beispielsweise alternierend so lange, bis der Kern 3 einer Faser 1 genau gegenüber dem Streifenwellenleiter 4 liegt. Die optimale Lage wird dabei durch eine Maximierung des Lichtdurchgangs durch die Verbindungsstelle gefunden. Die Vorgang kann automatisiert werden, wobei als Regelgröße 13 für die Regeleinheit 14 das Durchgangslicht dient. Ist die optimale Lage der Faser 1 gefunden, kann durch eine gleichzeitige Verschiebung beider Klemmklötzchen 9 auf beiden Seiten die Faser 1 fest zwischen die beiden vorderen Teilen 5 der Führungsklötzchen eingepreßt werden.

Die Fixierung der Klemmklötzchen 9 auf der Grundplatte 6 kann dann beispielsweise durch eine Punktschweißung erfolgen. Es ist auch möglich, die konischen Flächen der Klemmklötzchen 9 und der vorderen Teile 5 der Führungsklötzchen durch eine geeignete Verzahnung so zu gestalten, daß die Klemmklötzchen 9 9 nur in Richtung IO-Chip 2 verschoben werden können und nach dem Einpressen der Faser 1 zwischen die Enden der beiden vorderen Teile 5 der Führungsklötzchen auf bei einer Entfernung der Stempel 11 fest in ihrer Lage fixiert bleiben.

Nach der Fixierung der Klemmklötzchen 9 werden die Stempel 11 und die Verschiebevorrichtung 12 entfernt, diese Einheit kann dann zur Justierung weiterer Fasern wieder eingesetzt werden.

Die in den Figuren gezeigte fertige Struktur wird mittels der bekannten Verfahren der Röntgentiefenlithographie und Galvanoplastik hergestellt. Zur Herstellung der federnden und beweglichen Teile 9, 5 und 11, die nicht fest mit der Substratplatte 1 verbunden sein dürfen, wird ein Verfahren angewendet, wie es z.B. in der DE-OS 37 27 142 beschieben ist. Dabei wird der Spalt 20 mittels partiellem Aufbringen einer Zwischenschicht erzeugt, die später wieder entfernt wird.

Die Substratplatte 1 sollte zur Vermeidung des Aufbaus von durch unterschiedliche thermische Ausdehnung bewirkten Spannungen und Maßverschiebungen aus dem selben Material wie das integrierte optische Bauelement bestehen. Vorwiegend werden hierzu z.Zt. verschiedene Gläser und Liciumniobat (LiNBO3) verwendet. Die Substratplatte wird zunächst mit einer Chromschicht die die Haftung der anschließend aufgebrachten Metallschichten sicherstellt und dann mit einer Galvanikstartschicht versehen. Auf die so vorbereitete Substratplatte wird eine wenige µm starke, später wieder entfernbare Zwischenschicht aufgetragen und mit lithographischen und ätztechnischen Methoden so strukturiert, daß den fernden Teilen 9, 5, 11 bzw. dem Spalt 20 + einem Sicherheitsbereich von 10 µm rundum entsprechende Struktur entsteht. Nun wird auf die Oberfläche eine ca. 130 µm dicke Schicht eine positiven Röntgenresists aufgebracht, der so über eine Röntgenmaske in Teilbereichen mit Synchrotronstrahlung bestaht wird, daß nach dem Weglösen der bestrahlten Breiche ein Negativ der geplanten Anschlagstege und Andruckelementstruktur entsteht.

Die so geschaffenen Vertiefungen werden sodann galvanisch bis zum Überwachsen der Resiststruktur mit einem Metall z.B. Nickel aufgefüllt. Als nächster Schritt wird eine mechanische Oberflächenbearbeitung zur Herstellung einer definierten Höhe der Metallstruktur durchgeführt und der restliche Röntgenresist entfernt.

Anschließend wird die Zwischenschicht wieder entfernt, damit der Spalt 20 entsteht und so die freie Beweglichkeit der federnden Teile, wie in der Figur 1 dargestellt, gesichert.

### Bezugszeichenliste

- 1: Lichtleitfasern
- 2: IO-Chips
- 3: Faserkern
- 4: Lichtstreifenleiter
- 5: vorderer Teil der Führungsklötzchen
- 6: Grund- bzw. Trägerplatte
- 7: Begrenzungslinie
- 8: Einschnürung
- 9: Klemmklötzchen
- 10: Stege, Sollbruchstelle
- 11: Stempel
- 12: Antrieb
- 13: Regelgröße
- 14: Regeleinheit
- 15: Führungskanäle
- 16: Vorderfläche
- 17: hinterer Teil der Führungsklötzchen
- 18: Zwischenstücke
- 19: Oberfläche
- 20: Spalte
- 21: Anschrägungen
- 22: schräge Flächen
- 23: Verschieberichtung
- 24: Zwischenstücke

## Patentansprüche

1. Vorrichtung zum Positionieren von Lichtleitfasern, mit einer Trägerplatte (6) aus maßstabilem Substrat, mindestens einem Führungskanal zur Aufnahme einer Lichtleitfaser (1), der durch eine auf der Oberfläche der Trägerplatte (6) fixierte Struktur gebildet wird,
dadurch gekennzeichnet, daß
die Struktur zumindest aus je zwei Führungsklötzchen (5,17), je zwei Klemmklötzchen (9), je zwei ortsfsten Führungselementen (18) und je zwei Stempeln besteht, wobei der Führungskanal durch je einen vorderen (5), beweglichen und einen hinteren Teil (17), mit der Trägerplatte (6) fest verbundenen Teil der Führungsklötzchen gebildet wird, und der vordere Teil (5) am hinteren Teil (17) so befestigt ist, daß eine Bewegung des vorderen Teiles (5) in einer Richtung parallel zur Oberfläche der Trägerplatte (6) und im wesentlichen senkrecht zum Führungskanal ermöglicht ist, wobei sich zwischen den jeweils vorderen Teilen (5) der Führungsklötzchen und der Oberfläche der Trägerplatte (6) ein Spalt im µm-Bereich befindet, wobei je eines der Klemmklötzchen (9) neben jedem Führungsklötzchen (5,17) auf der dem Führungskanal abgewandten Seite parallel zum Führungskanal auf der Trägerplatte (5) verschiebbar angeordnet ist, und wobei hinter jedem Klemmklötzchen (9) auf der Trägerplatte (5) einer der Stempel (11) zum Verschieben dieses Klemmklötzchens (9) angeordnet ist, und daß die Führungsklötzchen (5) und die Klemmklötzchen (9) jeweils korrespondierende, schräg zum Führungskanal verlaufende Seitenflächen (21,22) aufweisen, welche so ausgebildet sind, daß beim Verschieben der Klemmklötzchen (9) entlang des ortsfesten Führungselementes durch das Zusammenwirken der jeweils korrespondierenden schrägen Seitenflächen (21,22) die vorderen Teile (5) der Führungsklötzchen so bewegt werden, daß der zwischen ihnen befindliche Teil des Führungskanales verengt und damit eine in den Führungskanal eingelegte Lichtleitfaser (1) in diesem festgeklemmt wird.

2. Vorrichtung nach Anspruch 1, bei der die Führungsklötzchen (5) und Klemmklötzchen (9) einstückig durch eine Sollbruchstelle (10) miteinander verbunden hergestellt sind und somit beide einen Abstand von der Oberfläche im µm-Bereich aufweisen, und bei der die Sollbruchstelle so ausgebildet ist, daß die Führungsklötzchen (5) und die Klemmklötzchen (9) durch eine geeignete Bewegung des Stempels (11 voneinander getrennt werden können.

3. Vorrichtung nach Anspruch 1 oder Anspruch 2, bei der zwischen zu benachbarten Führungskanälen gehörigen Klemmklötzchen (9) auf der Trägerplatte (6) festsitzende Zwischenstücke (18) angebracht und als ortsfeste Führungselemente vorgesehen sind.

4. Vorrichtung nach Anspruch 1, bei der die Trägerplatte (6) aus demselben Material oder aus Material mit demselben thermischen Ausdehnungskoeffizient hergestellt ist, wie es für integriert optische Bauelemente verwendet wird, vorzugsweise aus Glas oder Lithiumniobat.

5. Vorrichtung nach Anspruch 1, bei der die Grundfläche des Führungskanales von der Oberfläche der Trägerplatte (6) gebildet wird.

6. Vorrichtung nach Anspruch 1, bei der Führungsklötzchen und Klemmklötzchen aus Metall oder einer Metallegierung hergestellt sind.

7. Vorrichtung nach Anspruch 1, bei der die Seitenflächen des Führungskanals mit der Oberfläche der Trägerplatte einen Winkel von etwa 90° einschließt.

## Claims

1. Apparatus for the positioning of optical fibres, having a carrier plate (6) formed from a mass-stable substrate, at least one guide duct for accommodating an optical fibre (1), said guide duct being formed by a structure fixed on the upper face of the carrier plate (6), characterised in that each structure comprises at least two guide blocks (5, 17), two clamping blocks (9), two fixed guide elements (18) and two punches, each guide duct being formed by a front movable portion (5) of the guide blocks and by a rear portion (17) of the guide blocks which is securedly attached to the carrier plate (6), and the front portion (5) is secured on the rear portion (17) so that a movement of the front portion (5) in a direction parallel to the upper face of the carrier plate (6) and substantially perpendicular to the guide duct is rendered possible, a gap in the µm range being provided between the respective front portions (5) of the guide blocks and the upper face of the carrier plate (6), each of the clamping blocks (9) being displaceably disposed adjacent each guide block (5, 17) parallel to the guide duct on the side remote from the guide duct on the carrier plate (6), and one of the punches (11) for the displacement of this clamping block (9) being disposed behind each clamping block (9) on the carrier plate (6), and in that the guide blocks (5) and the clamping blocks (9) each have corresponding lateral faces (21, 22) which extend inclinedly relative to the guide duct and are so configured that the front portions (5) of the guide blocks are moved during the displacement of the clamping blocks (9) along the fixed guide element by the co-operation of the respective corresponding inclined lateral faces (21, 22) in such a manner that the portion of the guide duct situated between said blocks narrows and, in consequence, an optical fibre (1) introduced into the guide duct is clamped securedly therein.

2. Apparatus according to claim 1, wherein the guide blocks (5) and clamping blocks (9) are produced in one piece, interconnected by means of a desired breaking location (10), and, in consequence, both have a spacing from the upper face in the µm range, and wherein the desired breaking location is so configured that the guide blocks (5) and the clamping blocks (9) can be separated from one another by means of a suitable movement of the punch (11).

3. Apparatus according to claim 1 or claim 2, wherein intermediate pieces (18), which sit securedly on the carrier plate (6), are mounted beween clamping blocks (9) belonging to adjacent guide ducts and are provided as fixed guide elements.

4. Apparatus according to claim 1, wherein the carrier plate (6) is produced from the same material, or from material having the same coefficient of thermal expansion, as is used for integrated optical component parts, preferably from glass or lithium niobate.

5. Apparatus according to claim 1, wherein the lower face of the guide duct is formed from the upper face of the carrier plate (6).

6. Apparatus according to claim 1, wherein the guide blocks and clamping blocks are produced from metal or a metal alloy.

7. Apparatus according to claim 1, wherein the lateral faces of the guide duct form an angle of substantially 90° with the upper face of the carrier plate.

## Revendications

1. Dispositif pour le positionnement de fibres optiques comprenant une plaque de support (6) en un substrat de dimensions stables, avec au moins un canal de guidage recevant une fibre optique (1), formé par une structure fixée à la surface de la plaque de support (6), caractérisé en ce que la structure se compose d'au moins chaque fois deux petits blocs de guidage (5, 17), de chaque fois deux petits blocs de serrage (9) et de chaque fois deux éléments de guidage (18) fixes et de deux poussoirs, le canal de guidage étant formé chaque fois par une partie avant (5), mobile, et une partie arrière (17) reliée aux petits blocs de guidage eux-mêmes solidaires de la plaque de support (6), et la partie avant (5) est fixée à la partie arrière (17) pour permettre un mouvement de la partie avant (5) dans une direction parallèle à la surface supérieure de la plaque de support (6), dans une direction principalement perpendiculaire à celle du canal de guidage, et entre chaque partie avant (5) des petits blocs de guidage et la surface supérieure de la plaque de support (6) se trouve un intervalle de l'ordre des microns, et chaque petit bloc de serrage (9) est monté coulissant à côté de chaque petit bloc de guidage (5, 17) sur le côté opposé à celui du canal de guidage, parallèlement au canal de guidage sur la plaque de support (5), et derrière chaque petit bloc de serrage (9) il est prévu sur la plaque de support (5), un poussoir (11) pour coulisser ce petit bloc de serrage (9) et les petits blocs de guidage (5), les petits blocs de serrage (9) ayant des surfaces latérales (21, 22) correspondantes, inclinées par rapport au canal de guidage, ces surfaces étant telles qu'au coulissement des petits blocs de serrage (9) le long de l'élément de guidage fixe, par la coopération des surfaces latérales inclinées (21, 22) respectives correspondantes, cela déplace les parties avant (5) des petits blocs de guidage pour rétrécir la partie du canal de guidage qui se trouve entre ces parties, et serrer ainsi la fibre optique (1) placée dans le canal de guidage.

2. Dispositif selon la revendication 1, caractérisé en ce que les petits blocs de guidage (5) et les petits blocs de serrage (9) sont réalisés en une seule pièce en étant réunis par un point de rupture de consigne (10) et ainsi les deux parties présentent un intervalle par rapport à la surface supérieure qui est de l'ordre des microns, et le point de rupture de consigne est tel que les petits blocs de guidage (5) et les petits blocs de serrage (9) puissent être séparés l'un de l'autre par un mouvement approprié du poussoir (11).

3. Dispositif selon la revendication 1 ou la revendication 2, caractérisé en ce qu'entre les petits blocs de serrage (9) appartenant aux canaux de guidage voisins, il existe des pièces intermédiaires (18) solidaires de la plaque de support (6) et constituant des éléments de guidage fixes.

4. Dispositif selon la revendication 1, caractérisé en ce que la plaque de support (10) est réalisée dans le même matériau ou en un matériau ayant le même coefficient de dilatation thermique que celui utilisé pour les composants optiques intégrés, de préférence du verre ou du niobiate de lithium.

5. Dispositif selon la revendication 1, caractérisé en ce que la surface de base du canal de guidage est réalisée à la surface supérieure de la plaque de support (6).

6. Dispositif selon la revendication 1, caractérisé en ce que les petits blocs de guidage et les petits blocs de serrage sont réalisés en métal ou en un alliage métallique.

7. Dispositif selon la revendication 1, caractérisé en ce que la surface latérale du canal de guidage forme un angle d'environ 90° avec la surface supérieure de la plaque de support.
